# NEUE EUROPÄISCHE PATENTSCHRIFT

(11) **EP 2 862 129 B2**
(45) Veröffentlichungstag und Bekanntmachung des Hinweises auf die Entscheidung über den Einspruch: **02.09.2026**
(45) Hinweis auf die Patenterteilung: 15.01.2020
(21) Anmeldenummer: 13741664.0
(22) Anmeldetag: 18.06.2013
(51) Int. Cl.: G06K 15/02, G06K 7/10

(54) **KONTROLLVORRICHTUNG FÜR EINE KENNZEICHNUNG, MIT EINER ERFASSUNGS- UND VERARBEITUNGSEINRICHTUNG ZUR ERFASSUNG DER KENNZEICHNUNG**
CONTROL DEVICE FOR A MARKING, WITH A REGISTRATION AND PROCESSING MODULE FOR THE MARKING REGISTRATION
APPAREIL DE CONTRÔLE D'UNE MARQUE, AVEC UN MODULE DE REGISTRATION ET DE TRAITEMENT POUR LA REGISTRATION DE LA MARQUE

(30) Priorität: 18.06.2012 DE 202012102237 U
(43) Veröffentlichungstag der Anmeldung: 22.04.2015
(73) Patentinhaber: WIPOTEC GmbH, 67657 Kaiserslautern (DE)
(72) Erfinder: CZERNY, Hans Michael, 8055 Zürich (CH); BURRI, Karl Georg, 8942 Oberrieden (CH)
(74) Vertreter: Eder Schieschke & Partner mbB
(86) Internationale Anmeldenummer: PCT/DE2013/100219
(87) Internationale Veröffentlichungsnummer: WO 2013/189487

(56) Entgegenhaltungen:
- WO-A1-2007/049774
- GB-A- 2 411 151
- JP-A- 2008 089 379
- JP-A- 2011 203 886
- US-A- 5 967 675
- US-A1- 2002 087 574
- US-A1- 2003 147 097

## Beschreibung

Die Erfindung betrifft eine Kontrollvorrichtung für eine Kennzeichnung, mit einer Erfassungs- und Verarbeitungseinrichtung zur Erfassung der Kennzeichnung. Derartige Kontrollvorrichtungen inklusive Kontrollverfahren und Kontrollsystem werden beispielsweise in der Pharmaindustrie im Bereich Pharmaherstellung eingesetzt.

Hierbei werden Verpackungen und/oder Umverpackungen von Pharmaprodukten mit individuellen Kennzeichnungen versehen und anschließend hinsichtlich ihrer Korrektheit gegengeprüft. Dabei werden relevante Dateninformationen wie beispielsweise Produktionslos, Seriennummer, Kommissionsnummer, Verfallsdatum auch auf inhaltliche Plausibilität (z.B. erlaubte Wertebereiche) geprüft.

Es wird aber auch die Druckqualität bezüglich Intensität, Farbe, Ausfall von Druckerdüsen/-pixeln usw. überwacht, um eine spätere korrekte Lesbarkeit der Kennzeichnung im Anwendungsbereich (in Apotheken, in Krankenhäusern, bei Patienten, in der Arztpraxis, etc.) zu gewährleisten.

Bei der industriellen Herstellung vom Pharmaprodukten sowie anderer industrieller Produkte herrscht in der Verpackungslinie eine hohe Verarbeitungsgeschwindigkeit. Ein freies Erkennen, Verarbeiten und Analysieren mit herkömmlichen Bildverarbeitungssystemen (Erfassungs- und Verarbeitungseinrichtung) erfüllt aber aufgrund des hierfür notwendigen Zeitaufwandes nicht die Anforderungen der gewünschten hohen Verarbeitungsgeschwindigkeit. Die Entwicklung und der Einsatz von theoretisch in nahezu Echtzeit arbeitenden Bildverarbeitungssystemen ist in der Verpackungsindustrie dagegen mit zu hohem Kostenaufwand verbunden.

Daher werden bei bekannten im Einsatz befindlichen Kontrollsystemen Bildverarbeitungssysteme eingesetzt, welche an die Position der Kennzeichnung auf einer Verpackung und an die inhaltlichen Felder (Art und Position der Felder), wie beispielsweise Prüffeld, Beschreibungsfeld, Seriennummernfeld, etc. sowie deren Typ Klartext, Grafik wie beispielsweise Logo, 1D-, 2D- oder 3D-Codes, wie beispielsweise Strichcode (z.B. EAN), Matrix-Codes (z.B. Aztec-Code, DataMatrix) Punkt-Codes, Erscheinungsform, an- bzw. eingelernt werden müssen.

Durch den Bediener muss der Software hierbei eine jeweilige Kennzeichnung und deren Position auf der Packung sowie jedes einzelne Feld in der Kennzeichnung mitgeteilt und bezüglich seiner Eigenschaften manuell einjustiert und/oder manuell bestätigt werden. Danach werden alle derartig gewonnenen Informationen für die Prüfung (im Folgenden Prüfinformationen genannt) abgespeichert und nachfolgend im Einsatz verwendet. Einmal eingelernte Prüfdaten können so zu einer aktuellen Verwendung, beispielsweise aus Datenbanken, immer wieder abgerufen werden.

Nachteiligerweise wird nicht nur bei neuen Verpackungen und/oder Kennzeichnungen, sondern bereits bei minimalen Änderungen am Aufdruck, zum Beispiel dessen Position auf der Packung, oder am Packungsformat, erneut eine manuelle Justage (am Druckersystem und/oder Bildverarbeitungssystem) notwendig.

Der vorliegenden Erfindung liegt daher die Aufgabe zugrunde, ein Kontrollverfahren und eine Kontrollvorrichtung zu schaffen, welche bei der Herstellung von Kennzeichnungen auf Produkten oder deren Verpackung eine schnelle und kostengünstige Überprüfung der Kennzeichnung ermöglichen, wobei gerade eine schnelle und einfache (Anfangs-)Justierung der Kontrollvorrichtung bei Änderung der Verpackung und/oder der Kennzeichnung gewährleistet werden soll.

Diese Aufgabe wird erfindungsgemäß mit einer Vorrichtung mit den Merkmalen des Anspruchs 1 gelöst.

Nach der Erfindung werden bei der Justage bzw. beim Justieren der Erfassungs- und Verarbeitungseinrichtung bei der ersten Verwendung oder bei Änderung der Verpackung und/oder der Kennzeichnung Daten verwendet, welche bereits beim Erstellen eines Layouts einer Kennzeichnung vorhanden sind. Hierbei können die eigentlichen, beim Aufdruck der Kennzeichnung auf ein Produkt oder dessen Verpackung verwendeten Daten in Prüfdaten umgesetzt (eventuell auch um zusätzliche Daten ergänzt) auch an die Erfassungs- und Verarbeitungseinrichtung, insbesondere Bildverarbeitungseinrichtung, übertragen werden.

Dort werden diese Daten als Prüfdaten verwendet, so dass ein zeitraubendes Justieren der Erfassungs- und Verarbeitungseinrichtung, insbesondere hinsichtlich der Abtastpositionen (beispielsweise Kameraposition), sowie hinsichtlich der Feldpositionen und Feldarten innerhalb einer Kennzeichnung entfallen kann. Nach der Erfindung ist als Erfassen und Verarbeiten insbesondere ein Aufnehmen, Vergleichen (mit Sollwerten) und Prüfen eines Bildes zu verstehen.

In bevorzugter Ausgestaltung der Erfindung werden Daten als Prüfdaten für die Erfassung und Verarbeitung (Vorrichtung und Verfahren), insbesondere Bildverarbeitung verwendet, welche am Layoutsystem vorliegen, bevor diese Daten intern in ein fertiges Komplett-Layout (Gesamtdruckbild) umgesetzt und als interne Pixelgrafik (beispielsweise Bitmap) abgedruckt und zum Beispiel Druckdüsensteuerdaten generiert werden. Gegenüber einer nach der Erfindung auch denkbaren Rückgewinnung bzw. Umsetzung der Druckdaten in Form einer Pixelgrafik in Prüfdaten kann hierdurch vorteilhafterweise erneut Zeit eingespart werden, welche ansonsten für die vorgenannten nicht trivialen Umsetzungsprozesse anfallen würden.

Die Daten können hierbei in für moderne Druckeingabe/-ausgabe einsetzbaren und verständlichen Formaten in Form von nicht Pixel-definierten Metadaten (z.B. Meta-Sprache, wie XML, etc.) vom Layoutsystem an die Erfassungs- und Verarbeitungseinrichtung, insbesondere Bildverarbeitungseinrichtung, übertragen werden. Hierdurch können auf einfache und schnelle Art und Weise semiautomatisch (beispielsweise mit manueller Bestätigung) oder gar automatisch Prüfdaten erzeugt werden, so dass semiautomatisch/automatisch (also ohne manuelle Nacharbeit) diese Daten als Prüfschritte vom Bildverarbeitungssystem übernommen und ausgeführt werden können. Selbstverständlich ist auch bei dieser Verwendung eine mögliche Anpassung bzw. Umsetzung/Konvertierung an die Erfassungs- und Verarbeitungseinrichtung denkbar, um spezielle Anforderungen zu erfüllen. Zudem ist es hierdurch möglich eine einheitliche und identische Datenquelle für Druckeinrichtung bzw. -system und Erfassungseinrichtung zu verwenden.

Insbesondere können hierbei unterschiedliche Gegebenheiten unterschiedlicher Erfassungs- und Verarbeitungseinrichtungen, insbesondere Bildverarbeitungssysteme, berücksichtigt werden, wobei derartige spezielle Informationen aus einer Spezifikationsdatenbank ladbar sein können, in welcher individuelle Informationen unterschiedlicher Bildverarbeitungssysteme gespeichert sein können.

Je nach Anforderung des Erfassungs- und Verarbeitungssystems und/oder der Produktionslinie (insbesondere Verpackungslinie), ist es auch denkbar, die während des Erstellens eines Layouts einer Kennzeichnung gewonnenen (und zumindest bei oder nach Fertigstellung des Layouts vorliegenden) Daten unter Einbeziehung zusätzlicher Daten als Prüfdaten zu verwenden.

Nach der Erfindung wird die Verwendung der Layoutdaten als Prüfdaten als Datenkonvertierung bezeichnet, auch wenn eine Aufbereitung der Prüfdaten in einer bevorzugten Ausführungsform der Erfindung bereits bei der Erstellung (während oder nach) eines Layouts erfolgt. Nach der Definition der Erfindung liegt insofern ein in ein Layoutverfahren oder -system integrierter Datenkonverter vor.

Selbstverständlich ist es aber auch denkbar, dass die vorgenannte Konvertierung der Daten (extern) auf dem Weg zwischen Layouteinrichtung und Erfassungs- und Verarbeitungseinrichtung oder in der Erfassungs- und Verarbeitungseinrichtung integriert erfolgt.

Es versteht sich von selbst, dass ein Datenkonverter sowohl als eigenständige Einheit bzw. Vorrichtung (beispielsweise externer PC mit darauf laufender Konvertierungsanwendung oder reine schaltungstechnisch realisierte Konvertierung, sowie Mischformen wie hardwaregestützte Konvertierung) als auch in Layouteinrichtung oder Erfassungs-und Verarbeitungseinrichtung integriert (in Anwendung und/oder Hardware integriert) realisiert werden kann.

Hierdurch ist es vorteilhafterweise möglich, diverse Datenformate für den Aufdruck (Druckdaten) einer Kennzeichnung (mittels Druckereinrichtung) und/oder als Prüfdaten für Erfassungs- und Verarbeitungseinrichtungen bzw. -systeme zu verwenden. Eine weitere (flexible) Anpassung an neue Formate kann zudem über ein Nachladen, beispielsweise in eine Umsetzungstabelle, etc. erfolgen.

In weiterer Ausgestaltung der Erfindung können zusätzliche Prüfkriterien, welche bei der Erstellung eines Layouts einer Kennzeichnung vorliegen, als Prüfdaten verwendet (konvertiert) werden. Beispielsweise können die Produkte auf "Gewicht" (zur Vollständigkeitskontrolle mittels Waagen), "Verunreinigungen" (z.B. mittels Röntgentechnik), korrekt verschlossene Schachtel (Laschenkontrolle) etc. geprüft werden, wobei die diesbezüglichen zu prüfenden Kriterien wiederum automatisch an die entsprechende Einrichtung (Bildverarbeitungseinrichtung, Wägeeinrichtung, Durchleuchteinrichtung etc.) in der Produktionslinie übergeben werden können.

Nach der Erfindung können sowohl die Position der Kennzeichnung auf einem Produkt oder einer Verpackung als auch die jeweiligen Felder der Kennzeichnung automatisch an der (mittels Prüfdaten) vorgegebenen Position gefunden, erkannt, identifiziert und mittels OCR und/oder OVR gewandelt ausgewertet werden. Hierbei werden bei der Erstellung eines Layouts bekannte Parameter bzw. Angaben oder Informationen verwendet, um ein zeitraubendes manuelles Eingeben und/oder Anlernen bei der Erfassungs- und Verarbeitungseinrichtung (Erkennen und Auswerten) neuer oder geänderter Gegebenheiten zu vermeiden.

Nach der Erfindung ist selbst eine permanente automatische Anpassung an für jede Verpackung individuelle Kennzeichnungen (z.B. Seriennummer, Zeit, Datum, Grafik, Artworks) möglich, ohne dass ein manuelles Eingreifen (erneutes Anlernen des Systems) erforderlich wäre. Als Informationen kommen hierbei in beliebiger Kombination Formate/Daten in Frage wie Position, Größe und Art der Kennzeichnung auf der Verpackung (Abstand zu Kanten, etc.), aber auch Positionen und Art der unterschiedlichen Felder innerhalb der Kennzeichnung, also auch Attribute der Felder wie beispielsweise Feldgröße, Feldposition, Feldinhalt/-art, Rahmen, Schriftart, Schriftgröße/Skalierung, Schriftattribute (Fett, Kursiv, unterstrichen, etc.), Schrift- und Hintergrundfarbe, Auswertemethode (OCR - Textrückerkennung oder OCV - Grauwert mit Sollwert vergleichen), Ziffernanzahl, Zahlenbereich (Plausibilitätskontrolle mit zulässigem Wertebereich), Artworks.

Diese Formate/Daten können nach der Erfindung auch direkt an die Druckereinrichtung übersandt oder in eine (Druck-)Grafikdatei umgewandelt werden. Das Erzeugen von Prüfdaten, die automatisch (ohne manuelle Nacharbeit) als Prüfschritte von der Erfassungs- und Verarbeitungseinrichtung übernommen und ausgeführt werden können, erfolgt beispielsweise mittels eines sogenannten Datenkonverters, welcher geeignete Programmmittel aufweist, um die Datenkonvertierung durchzuführen. Dieser Datenkonverter für die Aufbereitung der Layout-Daten als Prüfdaten kann hierbei in das Drucklayout-Programm oder im Druckersystem integriert sein, oder extern (als eine auf einem externen Rechner ausgeführte Anwendung) die Daten konvertieren.

Nach der Erfindung erfolgt auf diese Weise eine (automatische) Datenkonvertierung von (herkömmlichen) Druckdatenformaten (Drucklayouts, insbesondere in Meta-Sprache/Vektorgrafik) in ein durch Erfassungs- und Verarbeitungseinrichtungen (insbesondere optische Systeme) interpretierbares und Prüfdaten/Prüfschritte für die Erfassungs- und Verarbeitungseinrichtung (beispielsweise Kameras, insbesondere intelligente Smart-Kameras mit Web-basierter Parametrisierungsschnittstelle) enthaltendes Format.

Die Kennzeichnung kann auf dem Produkt oder der Verpackung in beliebiger Weise aufgebracht werden. Entsprechende Einrichtungen hierzu sind beispielsweise Drucker mit unterschiedlicher Drucktechnik, insbesondere Tintenstrahltechnik oder auch Laser-Farbwegbrandsystem. Selbstverständlich ist es aber auch denkbar, die Kennzeichnung mittels anderer Techniken, wie beispielsweise Prägen (auch für Braille-Kennzeichnung), Ritzen, Ätzen, etc. aufzubringen.

In bevorzugter Ausgestaltung der Erfindung umfasst die Kontrollvorrichtung ein DruckLayout-Programm mit integriertem Datenkonverter sowie mindestens ein Drucksystem.

Weitere vorteilhafte Ausgestaltungen der Erfindung ergeben sich aus den Unteransprüchen.

Die Erfindung wird nachfolgend anhand eines in der Zeichnung dargestellten Ausführungsbeispiels näher erläutert.

In der Zeichnung zeigen:
- Fig. 1: ein schematisches Blockschaltbild einer Kontrollvorrichtung nach der Erfindung und
- Fig. 2: eine schematische Darstellung einer Kennzeichnung.

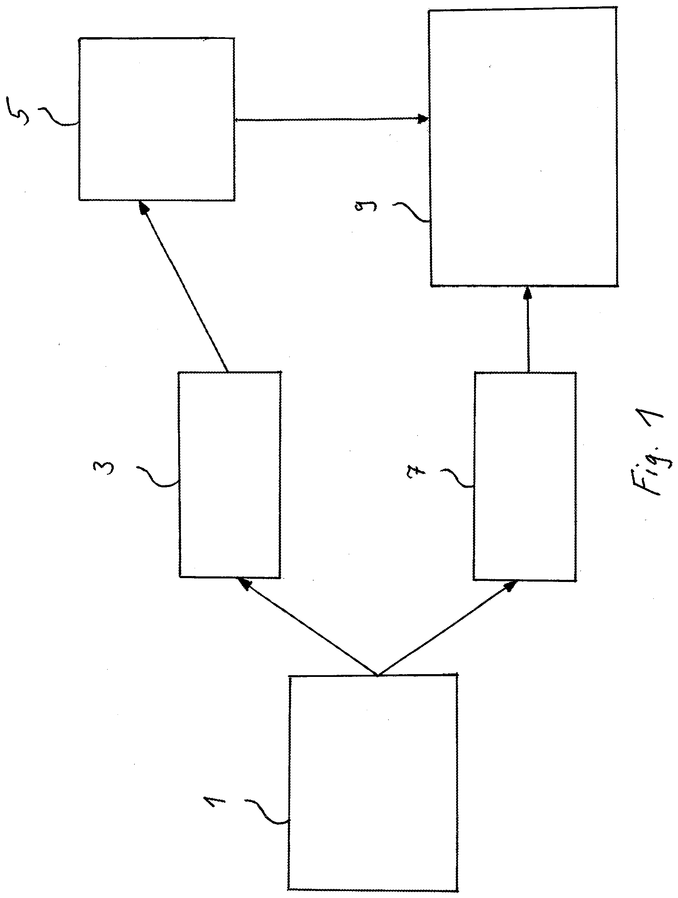

Die in Fig. 1 dargestellte Kontrollvorrichtung umfasst eine Layouteinrichtung 1 zur Erstellung eines Layouts einer Kennzeichnung, welche als Druckdaten 3 an einen Drucker übertragen werden, welcher die Kennzeichnung auf ein Produkt oder eine Verpackung aufdruckt. In der Layouteinrichtung 1 integriert befindet sich ein Datenkonverter, welcher Daten, welche bei Layouterstellung bekannt sind, in Prüfdaten 7 umsetzt und an ein Bildverarbeitungssystem 9 überträgt.

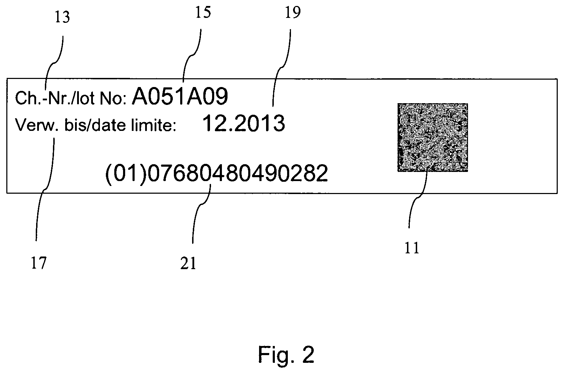

Bei der Erstellung des Layouts der in Fig. 2 dargestellten Kennzeichnung werden unterschiedliche Felder innerhalb einer Kennzeichnung in Art und Position erstellt und festgelegt. So kann ein Feld "Chargennummer" eine entsprechend lesbare Feldbezeichnung 13 erhalten, wohingegen sich der Feldinhalt 15 in gleicher Zeile im unmittelbaren Anschluss rechts neben dieser Feldbezeichnung 13 befindet.

Unter der links oben befindlichen "Chargennummer" ist ein Feld "Verwendungsdatum" mit einer Feldbezeichnung 17 und einem in gleicher Zeile unmittelbar rechts daneben befindlichen Feldinhalt 19 angeordnet.

Wie aus Fig. 2 ersichtlich, werden im Falle der Felder "Chargennummer" und "Verwendungsdatum" sowohl für Feldbezeichnung 13, 17 (Buchstaben inklusive Sonderzeichen) als auch Feldinhalt (Zahlen) Zeichen im Klartext verwendet.

So ist auch eine mittig unten in der Kennzeichnung angeordnete Seriennummer 21 direkt ohne Dekodierung, beispielsweise für Verbraucher oder Anwender, ohne weiteres lesbar.

Dagegen befindet sich im rechten Bereich der Kennzeichnung ein codiertes Feld (das im Weiteren als Barcode 11 bezeichnet wird), welches nur mit entsprechenden Dekodiermitteln (Scanner mit Dekodiersoftware) ausgelesen werden kann.

Zudem kann in der Layouteinrichtung 1 auch die Position der Kennzeichnung auf ihrem späteren Verwendungsort festgelegt werden.

Diese Daten, also sowohl die Position (sowie Art und Größe) der Kennzeichnung auf dem Produkt oder der Verpackung als auch die Feldpositionen der Felder 13, 15, 17, 19, 21 und 11, sowie deren Art (Klartext, kodiert, Länge des Feldes, Schriftgröße, Schrifttyp, etc.) werden einem Konverter zugeführt, welcher vorzugsweise in der Layouteinrichtung als Anwendung integriert ist.

Der Konverter setzt vorgenannte Daten/Formate in Prüfdaten 7 um, nach welchen Prüfschritte des Bildverarbeitungssystems ablaufen bzw. der Ablauf gesteuert wird.

So kann eine zeitraubende Einjustierung und/oder das Einlernen des Bildverarbeitungssystems vermieden werden, da die Prüfdaten automatisch erstellt werden und im Bildverarbeitungssystem vorliegen.

Im Unterschied zu herkömmlichen Systemen, welche Prüfdaten für eine schnelle Verarbeitung erst mittels manueller Eingabe und/oder Anlernen ("teach in") erstellen, kann mit dem erfindungsgemäßen System und Verfahren eine beliebige Änderung in Kennzeichnung und/oder Produkt/Verpackung (Typ, Geometrie, Material, Raumlage) schneller (automatisch) berücksichtigt werden. Ein erneutes (manuelles) Einlernen des Bildverarbeitungssystems entfällt.

Die Anwendung von Histogrammmethoden und Differenzbildern ohne Einlernen reicht dagegen für ein gewünscht schnelles Bedrucken von Produkten oder Verpackungen in einer Produktionslinie nicht aus. Dagegen ermöglicht die Erfindung eine hierbei erforderliche einzelne Prüfung der Druckbereiche und eine feine Positionierung sowie Repositionierung einzelner Prüfbereiche.

Selbstverständlich sind das erfindungsgemäße System sowie das Verfahren nicht auf das dargelegte Ausführungsbeispiel begrenzt. Ihre Einsetzbarkeit betrifft alle Anwendungen, in welchen eine Kennzeichnung eines Produktes oder einer Verpackung sowie deren Überprüfung auf korrekte Lesbarkeit gefordert ist. Im Zuge der heutzutage üblichen Qualitätssicherung auch für die Kennzeichnung von Produkten ist die Verwendung der Erfindung für die Kennzeichnung von Spezialprodukten (Medizintechnik, militärische Produkte, etc.) bis hin zu Alltagsprodukten (Lebensmittelverpackung) denkbar.

Unabhängig vom Anwendungsfall der Erfindung können zudem nachfolgend geschilderte Vorteile erreicht werden.

Durch das erfindungsgemäße System kann eine gemeinsame automatische Umschaltung von Drucksystem und Kamerasystem bzw. Erfassungseinrichtung erfolgen, indem aktuelle neue Prüfdaten und Druckdaten zur Verfügung gestellt werden. Auf diese Weise entfallen für ein Neujustieren ansonsten erforderliche Stillstandszeiten.

Durch die Erstellung von Prüfdaten mittels eines (Daten-)Konverters kann auch auf einfache Weise eine Anpassung an unterschiedliche Erfassungssysteme und Drucksysteme vorgenommen werden. Hierzu können beispielsweise entsprechende individuelle Spezifikationsdaten eines Erfassungssystems oder Drucksystems manuell eingegeben oder aus einer Datenbank abgerufen werden. Hierdurch wird durch die Erfindung vorteilhafterweise eine Unabhängigkeit vom Zielsystem (Druck- und Erfassungssystem) ermöglicht. Insbesondere können bei der Erstellung des Layouts der Kennzeichnung verwendete Fonts nach der Erfindung auch auf einfache und schnelle Weise dem Erfassungs- und Verarbeitungseinrichtung zur Verfügung gestellt werden.

Da vorzugsweise alle Prüfdaten und Einstellungen des Erfassungssystems automatisch aus den Layout-/Druckdaten ermittelt und automatisch in das Bildverarbeitungssystems übermittelt werden, ist nur kurze Zeit nach Ende der Drucklayout-Erstellung ein Erfassungssystem, insbesondere Bildverarbeitungssystem, initialisiert und die Gesamtvorrichtung (für Bedrucken und Erfassen und Verarbeiten, zum Beispiels Track & Trace) einsatzbereit.

Durch das erfindungsgemäße System sowie das Verfahren können vorteilhafterweise Prüfkriterien, wie:
- Code-Lesen
- Entspricht Druck der Vorgabe?
- vektorisierte Druckervorgaben mit Druckbild vergleichen
- Nozzleouts prüfen (zum Beispiel Verstopfungen der Tintendüsen erkennen)
- Fehlende Druckbereiche (zum Beispiel falsche Positionen der Felder erkennen)
- Leerbereiche Prüfung (zum Beispiel Zusatzdrucke, größere Satelliten (Spritzer), Verschmierer, etc.)
auf einfache Weise erfüllt werden.

Das erfindungsgemäße System und Verfahren ermöglicht damit eine maximale Erkennungsgüte bei minimalen Einrichtaufwand der Erfassungs- und Verarbeitungseinrichtung und/oder des Druckssystems. Durch die Automatisierung und Vermeidung der Eingabe manueller teils mehrfacher Eingabe von Produktionsdaten kann auch die Fehleranfälligkeit verringert werden. Zudem wird der Materialverschleiß minimiert. Zudem ermöglicht die Erfindung statt einer getrennten Datenhaltung vorteilhafterweise eine zentrale Datenhaltung in nur einem Layout.

### Bezugszeichenliste

- 1: Layouteinrichtung mit integriertem Datenkonverter
- 3: Druckdaten
- 5: Drucker
- 7: Prüfdaten
- 9: Bildverarbeitungssystem
- 11: Barcode
- 13: Feldbezeichnung Charge
- 15: Feldinhalt von 13
- 17: Feldbezeichnung Verwendungsdatum
- 19: Feldinhalt von 17
- 21: Seriennummer

## Patentansprüche

1. Kontrollvorrichtung für eine Kennzeichnung, mit einer Bildverarbeitungseinrichtung (9) zum Aufnehmen, Vergleichen und Prüfen der Kennzeichnung und mit einer Layouteinrichtung (1) zur Erstellung eines Layouts der Kennzeichnung,
**dadurch gekennzeichnet, dass**
die Kontrollvorrichtung eine Datenkonvertereinrichtung umfasst, welche derart ausgebildet ist, dass sie aus Daten zum Erstellen der Kennzeichnung Prüfdaten (7) erzeugt, um die Bildverarbeitungseinrichtung (9) zu steuern,
wobei es sich bei den Daten zum Erstellen der Kennzeichnung um mittels der Layouteinrichtung (1) festgelegte Layoutdaten handelt und
die Layoutdaten bei der Erstellung des Layouts bekannte Parameter oder Informationen über Position der Kennzeichnung auf einem Produkt oder einer Verpackung und Position der jeweiligen Felder innerhalb der Kennzeichnung beinhalten,
so dass sowohl die Position der Kennzeichnung auf dem Produkt oder der Verpackung als auch die jeweiligen Felder der Kennzeichnung automatisch an der mittels der Prüfdaten vorgegebenen Position gefunden, erkannt, identifiziert werden können.

2. Kontrollvorrichtung nach Anspruch 1, **dadurch gekennzeichnet, dass** die Prüfdaten als Metadaten vorliegen.

3. Kontrollvorrichtung nach einem der vorhergehenden Ansprüche, **dadurch gekennzeichnet, dass** die Datenkonvertereinrichtung in der Layouteinrichtung (1) und/oder der Erfassungs- und Verarbeitungseinrichtung (9) integriert ist.

## Claims

1. An inspection device for a label, having an image processing unit (9) for recording, comparing, and checking the label, and having a layout unit (1) for creating a layout of the label,
**characterized in that**
the inspection device includes a data converter unit that is designed in such a way that it generates test data (7) from data for creating the label in order to control the image processing unit (9),
wherein the data for creating the label are layout data defined by means of the layout unit (1), and
the layout data include parameters of information known during the creation of the layout about the position of the label on a product or a packaging and the position of the respective fields within the label,
such that both the position of the label on the product or the packaging and the respective fields of the label can automatically be found, recognized and identified at the position predetermined by means of the test data.

2. The inspection device according to Claim 1, **characterized in that** the test data are present as metadata.

3. The inspection device according to one of the preceding claims, **characterized in that** the data converter unit is integrated into the layout unit (1) and/or the detection and processing unit (9).

## Revendications

1. Dispositif de contrôle pour une étiquette, comportant un appareil de traitement d'images (9) permettant de capturer, de comparer et de vérifier l'étiquette, et comportant un appareil de mise en page (1) permettant de créer une mise en page de l'étiquette,
**caractérisé en ce que**
le dispositif de contrôle comprend un appareil de conversion de données qui est configuré de telle sorte qu'il génère, à partir de données pour la création de l'étiquette, des données de vérification (7) afin de commander l'appareil de traitement d'images (9),
dans lequel les données pour la création de l'étiquette sont des données de mise en page définies à l'aide de l'appareil de mise en page (1) et
les données de mise en page contiennent, lors de la création de la mise en page, des paramètres ou des informations connus concernant l'emplacement de l'étiquette sur un produit ou un emballage et l'emplacement des champs respectifs au sein de l'étiquette,
de sorte que, à la fois l'emplacement de l'étiquette sur le produit ou l'emballage et les champs respectifs de l'étiquette peuvent être automatiquement localisés, reconnus et identifiés à l'emplacement prédéfini au moyen des données de vérification.

2. Dispositif de contrôle selon la revendication 1, **caractérisé en ce que** les données de vérification se présentent sous forme de métadonnées.

3. Dispositif de contrôle selon l'une des revendications précédentes, **caractérisé en ce que** l'appareil de conversion de données est intégré dans l'appareil de mise en page (1) et/ou dans l'appareil de détection et de traitement (9).
